# FASCICULE DE BREVET EUROPEEN

(11) **EP 1 726 676 B1**
(45) Date de publication et mention de la délivrance du brevet: **14.07.2010**
(21) Numéro de dépôt: 06114591.8
(22) Date de dépôt: 26.05.2006
(51) Int. Cl.: C22C 47/00, C22C 49/00

(54) **Procédé de fabrication d'un insert bobiné de fils enduits et insert bobiné ainsi formé**
Verfahren zur Herstellung eines Einbaustücks durch Wicklung von beschichteten Faden und dadurch erhaltenes Einbaustück
Process of manufacturing an insert made by winding coated threads and obtained wound insert

(30) Priorité: 27.05.2005 FR 0551409
(43) Date de publication de la demande: 29.11.2006
(73) Titulaire: SNECMA, 75015 Paris (FR)
(72) Inventeur: Franchet Jean-Michel, 75018, Paris (FR); Klein, Gilles, 95540, Mery sur Oise (FR); Salvat, Louis, 38230, Tignieu Jameyzieu (FR)
(74) Mandataire: David, Daniel

(56) Documents cités:
- EP-A- 0 931 846
- WO-A-98/11265
- US-A- 3 638 298
- US-A- 3 763 001
- US-A- 5 897 922

## Description

L'invention concerne la fabrication d'une pièce incorporant un insert en matériau composite du type constitué de fibres céramiques dans une matrice métallique.

Dans le domaine de l'aéronautique, notamment, un objectif constant est l'optimisation de la résistance des pièces pour une masse et un encombrement minimaux. Certaines pièces peuvent désormais comporter un insert en matériau composite à matrice métallique, la pièce pouvant être par ailleurs monolithique. Un tel matériau composite comporte une matrice d'alliage métallique, par exemple d'alliage de titane Ti, au sein de laquelle s'étendent des fibres, par exemple des fibres céramiques de carbure de silicium SiC. De telles fibres présentent une résistance en traction bien supérieure à celle du titane (typiquement, 4000 MPa contre 1000 MPa). Ce sont donc les fibres qui reprennent les efforts, la matrice d'alliage métallique assurant une fonction de liant avec le reste de la pièce, ainsi que de protection et d'isolation des fibres, qui ne doivent pas entrer en contact les unes avec les autres. En outre, les fibres céramiques sont résistantes à l'érosion, mais doivent nécessairement être renforcées par du métal.

Ces matériaux composites peuvent être utilisés dans la fabrication de disques, d'arbres, de corps de vérins, de carters, d'entretoises, comme renforts de pièces monolithiques telles des aubes, etc.

Afin d'obtenir un tel insert de matériau composite, on forme préalablement des fils dits "fils enduits", comprenant une fibre de céramique enduite de métal. Le métal donne au fil l'élasticité et la souplesse nécessaires à sa manipulation. De préférence, un fil très fin de carbone ou de tungstène s'étend au centre de la fibre, le long de son axe, ce fil de carbone est enrobé de carbure de silicium, tandis qu'une fine couche de carbone est prévue à l'interface entre la fibre et le métal, pour assurer une fonction de barrière de diffusion et de tampon lors de la relaxation thermique différentielle qui intervient au moment du refroidissement du métal liquide déposé sur la fibre.

La fabrication des fils de matériau composite, ou fils enduits, peut être effectuée de diverses manières, par exemple par dépôt de métal en phase vapeur sous un champ électrique, par électrophorèse à partir de poudre métallique ou encore par enduction de fibres céramiques au trempé dans un bain de métal liquide. Un tel procédé d'enduction de fibres céramiques, au trempé, dans un métal liquide, est présenté dans le brevet EP 0 931 846, au nom de la Demanderesse. Ce procédé est beaucoup plus rapide que les autres procédés cités. On obtient ainsi des fils de matériau composite, ou fils enduits, qui servent de base à la formation de l'insert de matériau composite qui sera inclus dans la pièce.

Dans les procédés connus d'obtention d'une pièce avec un insert en matériau composite à matrice d'alliage métallique, le fil enduit est mise en forme en une pièce que l'on nomme préforme. Une telle préforme est obtenue par bobinage du fil enduit entre deux flasques métalliques de maintien s'étendant autour d'un mandrin central. Le bobinage se fait en spirale, la préforme obtenue se présentant sous la forme d'un disque, dont l'épaisseur est celle du fil enduit la constituant. Afin d'assurer la cohésion de la préforme, les flasques de maintien comportent des ajours au travers desquels est pulvérisé un matériau remplissant une fonction de collage, par exemple une résine d'acrylique.

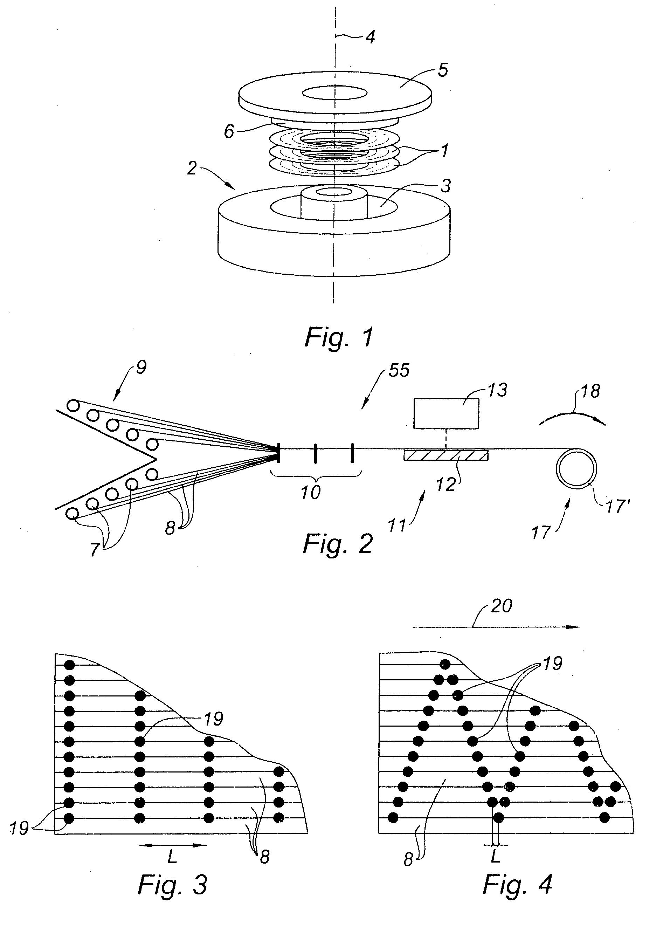

La figure 1 représente de manière schématique un mode de réalisation d'une pièce avec un insert en matériau composite. En référence à la figure 1, une pluralité de préformes 1, chacune en forme de disque, sont empilées dans un conteneur 2, de forme globalement cylindrique. Le conteneur comporte une cavité annulaire 3, dont la forme en coupe transversale à l'axe 4 du conteneur est celle des préformes 1. Des préformes 1 sont empilées jusqu'à remplir toute la hauteur de la cavité 3. Typiquement, 80 préformes sont ainsi empilées. Cette opération est manuelle.

Il est alors nécessaire d'effectuer une opération de déliantage, suivie d'une opération de dégazage, afin d'ôter le liant, par exemple une résine d'acrylique, des préformes 1. En effet, il ne doit rester aucun élément contaminant, à froid et à chaud, avec le titane, au stade de la compaction.

Un couvercle annulaire 5, comportant une saillie 6 de forme complémentaire à celle de la cavité annulaire, mais de dimension axiale plus faible, est rapporté sur le dessus du conteneur 2, la saillie 6 étant mise en contact avec la préforme 1 supérieure. Le couvercle 5 est soudé au conteneur 2, par exemple par soudage par faisceau d'électrons, l'ensemble étant de préférence mis sous vide. Il s'ensuit une étape de compaction isostatique à chaud de l'ensemble. Lors de cette dernière, l'insert composé de fil enduits juxtaposés est compacté, les gaines métalliques des fils enduits se soudent entre elles et avec les parois de la cavité 3 du conteneur 2 par diffusion pour former un ensemble dense composé d'alliage métallique (par exemple un alliage de Titane), au sein de laquelle s'étendent annulairement les fibres de céramique (SiC par exemple).

On obtient une pièce cylindrique, comportant un insert d'un matériau composite, résultat de la compaction des préformes 1 empilées. Cette pièce peut éventuellement subir un traitement de relaxation des contraintes permettant de compenser la dilatation différentielle entre les fibres céramiques et le métal, dans lequel elles sont noyées, lors du refroidissement de l'ensemble.

La pièce est alors généralement usinée, de façon à obtenir la pièce finale. Par exemple, si l'objectif est la fabrication d'un disque de compresseur monobloc - par monobloc, on entend que les aubes sont formées d'une seule pièce avec le disque - le conteneur, comportant son insert de matériau composite, est usiné, de façon à former un disque aubagé monobloc, une partie de la jante supportant les aubes comportant l'insert de matériau composite. La jante est de dimensions très inférieures aux jantes de disques monolithiques classiques d'alliage de métal, grâce aux grandes raideur et résistance conférées à l'ensemble par les fibres céramiques de l'insert en matériau composite, contenu dans la masse de la jante. Notamment, une telle jante peut se présenter sous la forme d'un simple anneau, et non d'un flasque ou disque en l'absence d'insert.

Ce procédé de fabrication d'une pièce avec un insert en matériau composite présente de nombreux inconvénients, et n'est pas industriellement exploitable du fait de la longueur, de la complexité et de la précision requise de ses étapes.

Tout d'abord, les fibres de céramique étant fragiles, les opérations sur les fils enduits doivent avant tout empêcher tout contact entre elles et le soudage de fils enduits n'a pas été envisagé jusqu'à présent.

En outre, les opérations de déliantage et de dégazage sont non seulement longues, mais on n'est jamais certain que la totalité du liant ait été enlevée. Afin de s'assurer de la complète disparition du liant, nécessaire notamment au bon comportement subséquent de l'alliage de Titane, plusieurs étapes de déliantage et dégazage sont nécessaires, ce qui augmente la durée et le coût globaux du procédé.

De surcroît, en cas de rupture du fil lors de son bobinage entre les deux flasques, il est nécessaire de former une nouvelle préforme, dans la mesure où il n'existe pas actuellement de moyens permettant de résoudre le problème et de reprendre le bobinage.

Par ailleurs, l'étape de positionnement des préformes de fil enduit dans le conteneur est actuellement manuelle. Le coût de l'opération et surtout sa précision s'en trouvent affectés. Or, le positionnement du fil enduit dans le conteneur est un facteur critique de la gamme de fabrication, dans la mesure où il conditionne les performances du matériau, avec une influence très importante de l'orientation de la fibre céramique en fonction des sollicitations principales de la pièce. Il conditionne également la qualité du matériau composite, par la conservation de l'intégrité de la fibre céramique, lors des différentes étapes de fabrication de la pièce. Il conditionne enfin le coût final de la pièce, de nouveau, du fait que les opérations de positionnement des fils enduits sont relativement longues et effectuées de manière manuelle. Le positionnement des fils dans le conteneur gagnerait donc à être amélioré.

A cet effet, l'invention a pour objectif une méthode de réalisation d'un insert bobiné de fils enduits qui puisse être industrialisée.

Conformément à l'invention, le procédé de fabrication d'un insert bobiné de fils enduits, chaque fil comportant une fibre céramique enrobée d'une gaine métallique, est caractérisé par le fait qu'il comporte une étape de bobinage d'une nappe de fils enduits liés entre eux sur une pièce dans laquelle, en début de bobinage, on bobine un clinquant métallique d'accrochage de la partie interne de l'insert, en fin de bobinage, on bobine un clinquant métallique d'accrochage de la partie externe de l'insert.

L'invention sera mieux comprise et d'autres caractéristiques ressortiront de la description qui suit de la mise en oeuvre du procédé en référence aux dessins sur lesquels :
- la figure 1 représente une vue en perspective schématique d'une opération d'obtention d'une pièce avec un insert en matériau composite de l'art antérieur ;
- la figure 2 représente une vue schématique d'un dispositif de fabrication d'une nappe liée de fils enduits ;
- la figure 3 représente une vue schématique de dessus d'une nappe formée selon un premier mode opératoire du dispositif de la figure 2 ;
- la figure 4 représente une vue schématique de dessus d'une nappe formée selon un deuxième mode opératoire du dispositif de la figure 2 ;
- la figure 5 représente une vue schématique en coupe, dans un plan transversal à la direction de déroulement des fils enduits, au niveau du module de soudage par laser du dispositif de la figure 2, du soudage de deux fils entre eux ;
- la figure 6 représente une vue en coupe schématique partielle d'une pièce formant la partie interne d'un conteneur, pour la mise en oeuvre d'une première forme de réalisation d'un procédé de fabrication d'une pièce avec un insert en matériau composite par bobinage d'un faisceau ou d'une nappe de fils enduits, en début de bobinage ;
- la figure 7 représente une vue en coupe schématique partielle de la pièce de la figure 6, en fin de procédé de bobinage ;
- la figure 8 représente une vue en coupe schématique partielle de la pièce de la figure 7, sur laquelle sont rapportés un anneau extérieur et un couvercle ;
- la figure 9 représente une vue en coupe schématique partielle d'un conteneur avec une cavité annulaire, pour la mise en oeuvre d'une deuxième forme de réalisation d'un procédé, décrit dans la présente demande, de fabrication d'une pièce avec un insert en matériau composite par bobinage d'un faisceau ou d'une nappe de fils enduits;
- la figure 10 représente une vue en coupe schématique partielle d'un mandrin pour la mise en oeuvre de la deuxième forme de réalisation du procédé, décrit dans la présente demande, de fabrication d'une pièce avec un insert en matériau composite par bobinage d'un faisceau ou d'une nappe de fils enduits ;
- la figure 11 représente une étape de fixation d'un couvercle sur le conteneur de la figure 9 ;
- la figure 12 représente une vue schématique partielle en coupe d'une étape d'accrochage d'une nappe de fils enduits, dans un procédé de fabrication d'un insert conformément à l'invention, avec un clinquant de début de bobinage ;
- la figure 13 représente une vue schématique partielle en coupe d'une étape d'accrochage d'une nappe de fils enduits, dans un procédé de fabrication d'un insert conforme à l'invention, avec un clinquant de fin de bobinage ;
- la figure 14 représente une vue schématique partielle en coupe d'une étape de découpe du clinquant de début de bobinage de la figure 12 ;
- la figure 15 représente une vue schématique partielle en coupe de la fin des étapes d'accrochage de la nappe de fils enduits des figures 12 et 13 et
- la figure 16 représente une vue schématique partielle en coupe d'un procédé de fabrication d'une pièce avec un insert en matériau composite bobiné, formé selon un procédé comportant des étapes d'accrochage de la nappe des figures 12 et 13.

L'invention est en lien avec la formation d'une pièce comportant un insert en matériau composite, à matrice métallique, dans lequel s'étendent des fibres céramiques. Le matériau composite est obtenu grâce à la fabrication préalable de fils, comprenant une fibre de céramique enduite de métal. Dans la forme de réalisation de l'invention, il s'agit d'une fibre céramique de carbure de silicium SiC, enduite d'un alliage de titane. De préférence, un fil très fin de carbone ou de tungstène s'étend au centre de la fibre, le long de son axe, ce fil de carbone est enrobé de carbure de silicium, tandis qu'une fine couche de carbone est prévue à l'interface entre la fibre et le métal, pour assurer une fonction de barrière de diffusion et de tampon lors de la relaxation thermique différentielle qui intervient au moment du refroidissement du métal liquide déposé sur la fibre. La fabrication des fils de matériau composite peut être effectuée de diverses manières, par exemple par dépôt de métal en phase vapeur sous un champ électrique, par électrophorèse à partir de poudre métallique ou encore par enduction de fibres au trempé dans un bain de métal liquide. Il sera préféré un procédé d'enduction de fibres céramiques, au trempé, dans un métal liquide, tel que celui présenté dans le brevet EP 0 931 846, au nom de la Demanderesse. On obtient ainsi des fils de matériau composite, que l'on nommera par la suite fils enduits, qui servent de base à la fabrication de l'insert en matériau composite qui sera inclus dans la pièce.

On décrit tout d'abord un procédé de fabrication d'une nappe liée de fils enduits.

On réalise en premier une pluralité de fils enduits, selon l'une des techniques connues, de préférence par un procédé d'enduction de fibres céramiques, au trempé, dans un bain de métal liquide. Ces fils sont enroulés chacun sur une bobine. Chaque fil a par exemple un diamètre de 0,2 à 0,3 mm.

En référence à la figure 2, une pluralité de bobines 7, chacune avec un fil enduit 8 enroulé à sa circonférence est disposée sur un module 9 de bobines 7. Ce module 9 permet de placer les bobines 7 de telle sorte qu'elles puissent être dévidées en direction d'un module d'ourdissage, présenté ci-après sans que les fils 8 ne se croisent. En l'espèce, le module de bobines 9 comporte une structure en triangle isocèle supportant les bobines 7, pour moitié sur un côté du triangle et pour moitié sur l'autre côté, la pointe du triangle étant dirigée du côté vers lequel les fils 8 des bobines 7 sont dévidés, vers un lieu situé sur l'axe de symétrie du triangle que forme la structure du module de bobines 9.

Selon une autre forme de réalisation, chaque bobine 7 peut supporter un faisceau de fils enduits. Ainsi, pour former une nappe de cent fils enduits, on peut utiliser dix bobines 7 comportant chacune un faisceau de dix fils enduits enroulé à sa circonférence.

Les fils enduits 8 sont dévidés en direction d'un module 10 d'ourdissage. Ce module d'ourdissage 10 est ici représenté de façon schématique et non détaillée car sa structure est accessible à l'homme du métier. Il est comparable à un module d'ourdissage utilisé dans le domaine du tissage. Le module d'ourdissage 10 comprend des moyens de guidage permettant de disposer les fils 8, tendus, parallèlement les uns aux autres, en une couche dans un même plan, sans chevauchement entre eux, en contact les uns avec les autres. L'objectif est de constituer une nappe plane de fils 8 parallèles en contact les uns avec les autres.

Les fils 8 ainsi ourdis sont entraînés dans un module 11 de soudage par laser. Ce module comporte un support 12 plan sur lequel se déplacent les fils 8, au-dessus duquel est monté un dispositif 13 de soudage par laser. Les fils 8 sont donc entraînés devant le dispositif de soudage par laser 13. L'ensemble est de préférence contenu dans une atmosphère neutre, par exemple dans une atmosphère d'argon projeté par une buse. Le dispositif 13 de soudage par laser peut par exemple comporter un laser de type YAG (Yttrium Aluminium Garnet) dopé au néodyme (Nd), qui présente l'avantage d'une grande précision quant à sa puissance et au point d'impact de son faisceau laser, ainsi que l'avantage d'une grande finesse du faisceau. Le laser présentera ici de préférence une puissance comprise entre 2 et 5 W.

En aval du module de soudage par laser 11, les fils 8 sont entraînés par un module 17 d'entraînement des fils 8, depuis le module de bobine 9, en translation sur le support 12. Ce module d'entraînement 17 comporte en l'espèce une bobine 17' rotative autour de laquelle les fils 8 sont enroulés. La bobine 17' est entraînée en rotation, comme représenté par la flèche 18. Ainsi, les fils 8 sont entraînés depuis leur bobine 7 du module de bobines 9, le long du module d'ourdissage 10 et du module de soudage par laser 11, par le module d'entraînement 17, l'ensemble formant un dispositif 55 de formation d'une nappe liée de fils enduits 8. La nappe liée est enroulée sur la bobine 17' du module d'entraînement.

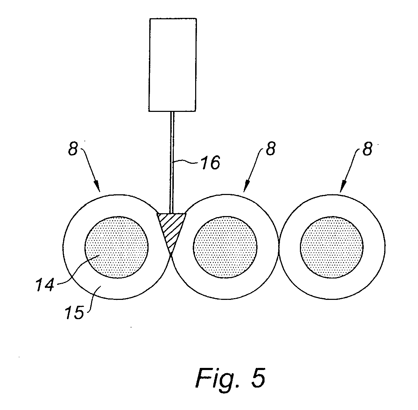

On voit sur la figure 5 une représentation en coupe, dans un plan transversal à la direction de déroulement des fils 8, au niveau du module de soudage par laser 11, du soudage de deux fils 8 entre eux. Le soudage effectué est un soudage par points par le dispositif de soudage par laser 13. Chaque fil 8 est solidarisé à ses voisins au niveau d'une pluralité de points de soudure. Chaque fil 8 comporte, comme on l'a vu précédemment, une fibre céramique 14, enrobée d'une gaine de métal 15, par exemple un alliage de Ti. Le faisceau laser est dirigé, comme représenté par la flèche 16, dans la direction d'un point de contact entre deux fils 8 successifs, perpendiculairement au plan contenant globalement les axes des fils 8 entraînés sur le support 12. Il s'ensuit une fusion locale de leur gaine de métal 15. On utilise le laser à faible puissance, par ailleurs très concentrée, de manière à s'assurer que la fibre céramique 14 ne soit pas affectée par cette fusion locale. Un volume minimum de la gaine métallique 15 est fondu. Il suffit à assurer la solidarisation des fils 8 à cet endroit. Les paramètres du soudage sont optimisés de telle sorte que le bain de soudage résultant de la fusion du métal ne soit pas débouchant.

Il est important que le faisceau laser soit dirigé sur une zone ponctuelle chevauchant deux fils 8, perpendiculairement au plan des fils 8, de manière qu'il n'endommage pas les fibres de céramique 14, dont l'intégrité est une condition nécessaire à la fonction qui leur est assignée, dans l'application à la fabrication d'une pièce avec un insert en matériau composite.

Il n'est pas nécessaire que les points de soudure soient très résistants. Leur fonction est uniquement d'assurer une solidarisation globale, ou maintien, des fils 8 entre eux, en vue de constituer une nappe liée. Cette solidarisation doit juste être assez forte pour permettre la manutention de la nappe, ses éventuels bobinage et débobinage, en vue par exemple de la constitution d'une pièce avec un insert en matériau composite. Il s'agit donc d'un soudage de maintien des fils 8 entre eux.

Les figures 3 et 4 représentent de façon schématique deux modes opératoires envisagés pour le module de soudage par laser 11, en l'espèce pour la formation d'une nappe de douze fils enduits 8.

Dans le mode opératoire de la figure 3, lorsque les fils enduits 8 sont situés sous le dispositif de soudage par laser 13, le module d'entraînement 17 est arrêté, afin de laisser les fils 8 immobiles. Le dispositif de soudage 13 effectue alors une série de points de soudure entre les fils 8 voisins, le long d'un segment perpendiculaire à leur axe de défilement sous le dispositif de soudage 13. A cet effet, le dispositif de soudage 13 effectue un premier point de soudure 19 entre deux fils 8, comme exposé ci-dessus en référence à la figure 5. Il est alors arrêté et déplacé, perpendiculairement à la direction de défilement des fils 8, jusqu'au droit du point de contact suivant entre deux fils 8, qu'il soude selon un deuxième point de soudure 19, et ainsi de suite, jusqu'à ce que tous les fils 8 soient solidarisés entre eux le long de ce segment de déplacement. Le dispositif de soudage 13 effectue donc un segment de points de soudure 19, perpendiculaire à l'axe de défilement des fils 8 sous le dispositif de soudage 13. Le module d'entraînement 17 est alors actionné de manière à faire défiler les fils 8 sur une longueur "L" devant le dispositif de soudage 13, puis l'opération est répétée sur un autre segment, parallèle au premier.

Dans le mode opératoire de la figure 4, les fils 8 sont entraînés de manière continue, dans la direction et le sens de défilement représentés par la flèche 20, mouvement imposé par le module d'entraînement 17. Le dispositif de soudage 13 effectue les mêmes opérations que précédemment, à savoir un soudage, puis le déplacement vers le point suivant selon une trajectoire perpendiculaire à la direction 20 du mouvement des fils 8, etc., depuis le premier fil 8 vers le dernier, puis inversement. Si la vitesse de déplacement des fils 8 est suffisamment faible, le soudage des points 19 entre deux fils en mouvement 8 est possible. On obtient donc une série de points de soudure 19 entre les fils 8, qui forme un zigzag sur la nappe formée par les fils 8.

Il est également possible d'obtenir une telle répartition des points de soudure 19 en zigzag en arrêtant le module d'entraînement 17 lors du soudage de chaque point de soudure 19, le module d'entraînement 17 entraînant les fils 8 sur une faible distance "1" entre chaque point de soudure 19, tandis que le dispositif de soudage 13 est déplacé.

Il est également possible de n'opérer qu'un ralentissement du mouvement des fils 8 au moment du soudage des points 19.

L'avantage d'une telle répartition des points de soudure 19 est sa plus grande homogénéité sur la surface de la nappe constituée par les fils 8.

Quoi qu'il en soit, en sortie du module de soudage par laser 11, les fils 8 se présentent sous la forme d'une nappe liée, au sein de laquelle ils sont solidarisés les uns aux autres au niveau des points de soudure 19 de maintien. La nappe est enroulée sur la bobine 17' du module d'entraînement 17.

Il n'est pas fait référence ici à la phase d'initialisation du procédé de fabrication d'une nappe liée de fils enduits 8. Cette phase peut être adaptée librement par l'homme du métier, par exemple en enroulant en début de procédé les fils 8 sur la bobine 17' sans qu'ils soient solidarisés les uns aux autres, la portion la plus intérieure de la nappe bobinée finale n'étant donc pas sous forme de nappe, ou par exemple en entraînant les fils en début de procédé grâce à un autre dispositif d'entraînement et en les reliant à la bobine 17' lorsqu'ils commencent à se présenter sous forme de nappe.

La distance "L" entre les segments de points de soudure 19, dans le cadre de la configuration en segments de la figure 3, ou encore la distance longitudinale "1" entre deux points de soudure 19 successifs, dans la configuration en zigzag de la figure 4, est dimensionnée en fonction de la rigidité souhaitée pour la nappe de fils enduits 8. Ainsi, pour une nappe rigide, les points de soudure 19 seront rapprochés les uns des autres, pour une nappe souple, les points de soudure 19, seront éloignés les uns des autres. D'autres configurations de répartition des points de soudure 19 sont bien sûr envisageables. La configuration et les espacements des points 19 seront choisis en fonction de l'application à laquelle est destinée la nappe liée, notamment si elle doit être bobinée, vrillée, ... tout en respectant un espacement minimum pour assurer la cohésion de l'ensemble dans les conditions définies de l'application. Les spécifications relatives à la configuration de la répartition des points de soudure 19 sont moins liées au procédé lui-même qu'à l'application à laquelle la nappe de fils enduits 8 est destinée.

Grâce à la vitesse d'exécution du soudage laser et à sa précision, il est possible d'assurer la fabrication d'une nappe liée de fils enduits 8, les fils 8 étant solidarisés les uns aux autres, dans un système automatisé, industriellement, pour la mise en oeuvre du procédé qui vient d'être décrit. On obtient ainsi rapidement de grandes quantités de nappes de fils enduits 8 - on peut former plusieurs kilomètres d'une même nappe - se présentant sous une forme exploitable de diverses manières. Par ailleurs, les nappes sont solidarisées par fusion de la gaine de métal 15 des fils 8, donc sans apport de matière, notamment sans apport de liant tel qu'une colle, ce qui permet de supprimer, dans un procédé plus global de fabrication d'une pièce avec un insert de matériau composite utilisant des fils enduits, toutes les étapes de déliantage.

Un procédé de fabrication d'une pièce avec un insert en matériau composite, comprenant une étape de bobinage d'un faisceau ou d'une nappe de fils enduits, va maintenant être décrit.

Le procédé comprend une étape de bobinage d'un faisceau ou d'une nappe de fils enduits, soit sur une pièce intermédiaire qui est ensuite intégrée dans la cavité d'un conteneur, soit directement sur une partie interne du conteneur qui est ensuite complétée par une partie externe. Ainsi, au lieu d'empiler, sur toute la hauteur de la cavité, des préformes de la largeur de celle de la cavité, on bobine un faisceau ou une nappe de fils enduits, dont la largeur correspond à la hauteur de la cavité, le nombre de couches permettant de remplir la largeur de la cavité.

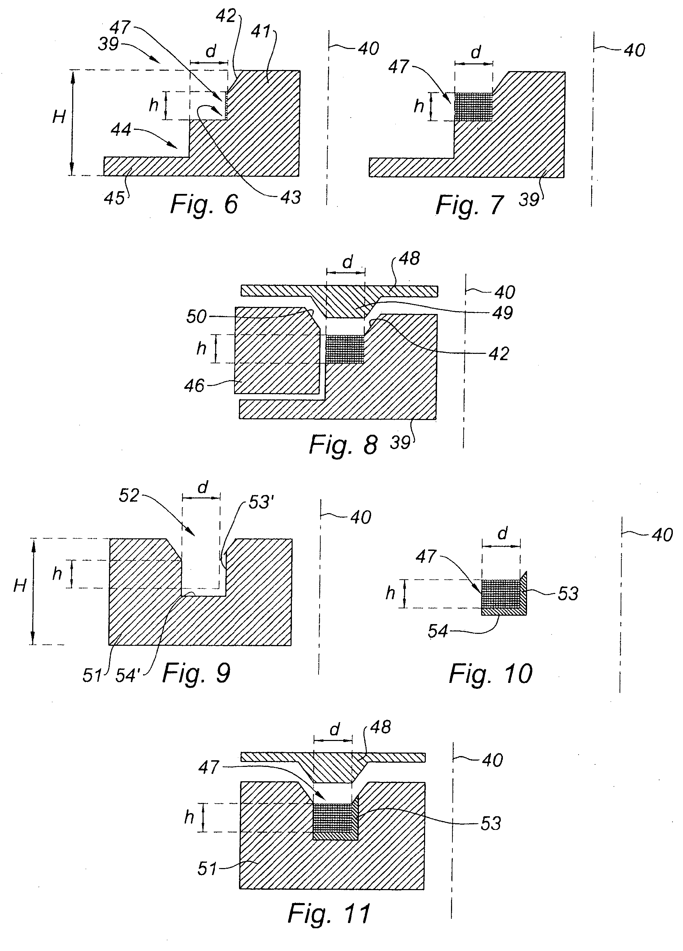

Une première forme de réalisation du procédé est présentée sur les figures 6 à 8. Dans cette forme de réalisation, on usine préalablement une pièce 39, formant partie interne d'un conteneur. Un conteneur s'entend d'une pièce de révolution autour d'un axe 40, comportant une cavité annulaire prévue pour recevoir des fils enduits. Un tel conteneur est de préférence dans le même métal que l'enrobage de fils enduits, ici en alliage de Ti. La pièce 39 formant partie interne d'un conteneur est une pièce de révolution autour d'un axe 40, monobloc. Sa portion interne 41 est de hauteur "H" égale à la hauteur du conteneur ; la hauteur s'entend de la dimension axiale. La pièce 39 comporte, périphériquement à cette portion interne 41, une portion chanfreinée 42 menant à un premier épaulement 43 de hauteur "h" et de largeur "d", qui correspond à la hauteur "h" et la largeur "d" de la cavité annulaire du conteneur ; la largeur s'entend de la dimension radiale. A partir de la périphérie de ce premier épaulement 43 s'étend un second épaulement 44, dont la dimension radiale complète la largeur du conteneur, sa surface s'étendant à une altitude inférieure à l'altitude de la surface de la cavité annulaire.

Autrement dit, la pièce 39 formant partie interne du conteneur correspond au conteneur, auquel a été enlevé un anneau extérieur, de hauteur inférieure à la hauteur du conteneur, que l'on voit sous la référence 46 sur la figure 8, libérant ainsi l'espace radial situé à l'extérieur de la cavité annulaire formée dans le conteneur.

Il est ainsi possible d'amener un faisceau ou une nappe de fils 47 enduits sur la paroi formant la hauteur "h" du premier épaulement 43. Cet épaulement 43 correspondant à la cavité annulaire sans sa paroi externe.

Afin de bobiner un faisceau ou une nappe de fils 47 sur la pièce 39, il est préférable, lors du premier tour, de fixer ces fils sur la paroi de l'épaulement 43. Cette fixation est de préférence obtenue par le procédé de soudage par contact entre deux électrodes et passage d'un courant moyenne fréquence, qui ne sera pas décrit précisément ici.

S'il s'agit d'un faisceau de fils enduits 47, on peut par exemple disposer, pour dévider le faisceau, d'un module de bobines et d'un module d'ourdissage semblables à ceux de la figure 2 pour le procédé de fabrication d'une nappe, le faisceau ourdi étant alors directement bobiné sur la pièce 39.

S'il s'agit d'une nappe de fils enduits 47 préalablement formée, elle aura de préférence été formée selon le procédé de fabrication d'une nappe décrit plus haut. La nappe, enroulée sur une bobine, par exemple la bobine 17' du module d'entraînement 17 du dispositif de fabrication d'une nappe de la figure 2, est dévidée pour être bobinée sur la pièce 39 formant partie interne de conteneur.

Il est également possible de bobiner, sur la pièce 39, une nappe, en remplaçant directement la bobine 17' du module d'entraînement 17 de la figure 2 par la pièce 39 formant partie interne du conteneur. Les fils enduits sont ainsi ourdis, formés en une nappe puis bobinés sur la pièce 39. Cette formation en nappe est toutefois facultative.

Dans les trois cas, la pièce 39 formant partie interne de conteneur est ici mise en rotation autour de son axe 40 pour provoquer le bobinage du faisceau ou de la nappe de fils enduits 47. En référence à la figure 7, une fois le nombre de couches de fils requises bobinées, en l'espèce un nombre de couches permettant de combler la largeur "d" de l'épaulement 43 correspondant à la cavité annulaire, le faisceau ou la nappe de fils enduits 47 est de nouveau solidarisé, cette fois au bobinage, de préférence par un procédé de soudage par contact entre deux électrodes, puis coupé. Dans ce cas, le faisceau ou la nappe de fils enduits 47 est soudé à la ou aux couches inférieures.

En référence à la figure 8, on rapporte alors l'anneau extérieur 46 formant la partie externe du conteneur autour de la pièce 39 formant partie interne. Cet anneau 46 peut éventuellement être soudé, de préférence par soudage par faisceau d'électrons, ou juste maintenu en position. On reforme bien ainsi un conteneur, avec sa cavité annulaire dans laquelle sont bobinés les fils enduits, non pas ici sous forme de préformes de largeur "d" empilées sur une hauteur "h", mais sous forme de faisceaux ou nappes de fils enduits 47, de largeur "h", qui ont été bobiné en un nombre de couches d'épaisseur radiale totale égale à la largeur "d" de la cavité annulaire.

On rapporte alors un couvercle 48 annulaire, présentant une saillie annulaire 49 destinée à compléter le chanfrein 42 de la pièce 39 formant partie interne du conteneur et un chanfrein 50 de l'anneau extérieur 46, concentrique au chanfrein 42 de la pièce 39, en regard de ce dernier. Entre ces deux chanfreins 42, 50 s'étend la cavité annulaire avec les couches de faisceau ou de nappe de fils enduits 47, sur lesquels la saillie annulaire 49 du couvercle 48 vient en appui.

Une fois la pièce 39 formant partie interne, l'anneau extérieur et le couvercle mis en place, on se retrouve dans une configuration de l'art antérieur, avec un conteneur fermé comportant un insert de fils enduits. Cet ensemble est alors soudé, de préférence par soudage par faisceaux d'électrons, mis sous vide puis compacté de façon isostatique à chaud, de manière bien connue, ce qui induit la formation d'un insert en matériau composite, avec une matrice métallique au sein de laquelle s'étendent des fibres céramiques. Il est alors possible d'usiner cet ensemble pour obtenir la pièce finale, avec son insert en matériau composite. Il est également possible d'usiner cet ensemble pour en extraire l'insert en matériau composite en tant que tel.

Un avantage du procédé qui vient d'être décrit est sa vitesse d'exécution, car les étapes de fabrication puis d'empilage des préformes sont supprimées, tandis que le bobinage des fils enduits sous forme de faisceau ou de nappe est beaucoup plus rapide. Par ailleurs, aucun matériau supplémentaire, comme par exemple de la colle, n'est nécessaire. Il s'ensuit, d'une part, un insert en matériau composite de meilleure qualité, d'autre part, la suppression des opérations de déliantage et de dégazage, et donc un gain de temps conséquent.

Une deuxième forme de réalisation du procédé est présentée sur les figures 9 à 11. Dans cette forme de réalisation, on forme préalablement un conteneur 51, annulaire autour d'un axe 40, de hauteur "H", comportant une cavité annulaire 52, correspondant à une cavité de hauteur "h" et de largeur "d" dont les parois de fond 54' et interne 53' ont été usinées afin d'obtenir une cavité annulaire 52 de plus grandes dimensions. On voit sur la figure 9, en traits pointillés, la cavité annulaire de hauteur "h" et de largeur "d", en traits pleins, la cavité telle qu'usinée, plus profonde et plus large.

En référence à la figure 10, on forme également un mandrin annulaire 53, avec un rebord radial 54, destiné à être logé dans la cavité annulaire 52 élargie du conteneur. Le mandrin 53 est dimensionné de telle façon que, lorsqu'il est logé dans la cavité 52, la cavité résultante est une cavité de hauteur "h" et de largeur "d", la paroi 53 du mandrin étant en appui sur la paroi interne 53' de la cavité annulaire 52 et son rebord radial 54 étant en appui sur sa paroi de fond 54'. Le mandrin 53 est ici constitué du même matériau que le conteneur 51, en l'espèce en alliage de Ti.

De même que précédemment, on bobine un faisceau ou une nappe de fils enduits 47, cette fois-ci sur le mandrin 53. Le faisceau ou la nappe présente une largeur totale égale à "h", et on bobine un nombre de couches dont l'épaisseur totale est égale à "d", largeur du rebord radial 54 du mandrin 53. De préférence, le début du faisceau ou de la nappe est solidarisé au mandrin par un procédé de soudage par électrodes par contact entre deux électrodes.

Une fois le nombre requis de couches de faisceau ou de nappe de fils enduits 47 bobinées, la dernière couche est solidarisée à la ou aux couches précédentes, de préférence par le procédé de soudage par contact entre deux électrodes, puis le faisceau ou la nappe est coupé. Le mandrin 53 avec son bobinage est alors inséré dans la cavité annulaire 52 du conteneur 51, comme on le voit sur la figure 11. On rapporte alors un couvercle 48, identique au couvercle 48 précédent, et l'ensemble est soudé par soudage par faisceau d'électrons, mis sous vide, puis compacté de façon isostatique à chaud et usiné pour obtenir la pièce finale avec son insert de matériau composite, de manière bien connue.

Dans les deux formes de réalisation qui ont été décrites, les fils enduits 47 sont bobinés les uns sur les autres, toujours dans le même plan. En vue en coupe, les axes des fils 47 forment donc un quadrillage dont la maille de base est une maille carrée. Afin d'obtenir une meilleure compacité de l'insert, il est préférable que chaque couche soit décalée de la précédente de la demi distance entre les axes de deux fils enduits successifs, les axes des fils de trois couches successives étant donc en quinconce les uns par rapport aux autres. A cet effet, il est possible de prévoir deux bobines dévideuses de nappes 47, ou deux modules dévideurs de faisceaux de fils enduits 47, placés de manière à ce que les nappes ou faisceaux 47 soient ainsi décalés en quinconce, enroulés simultanément l'un sur l'autre sur la pièce 39 formant la partie interne de conteneur ou sur le mandrin 53. Entre les bobines ou modules et la pièce 39, 53 sur laquelle ils sont enroulés, un dispositif peut être prévu, mettant en contact et plaçant les fils les uns par rapport aux autres.

Selon l'invention, on forme par bobinage un insert de fils enduits, comportant des clinquants métallique d'accrochage de début de bobinage et de fin de bobinage, obtenue par le procédé décrit ci-après, on dispose l'insert bobiné avec ses clinquants d'accrochage dans la cavité d'un conteneur, on rapporte un couvercle annulaire et l'ensemble est compacté de façon isostatique à chaud de sorte à obtenir une pièce avec un insert en matériau composite.

Ainsi, le bobinage direct à partir d'un ou plusieurs faisceaux ou nappes de fils enduits permet de maîtriser l'arrangement et donc la densité des fibres de céramique au sein de l'insert en matériau composite de la pièce.

Un procédé de fabrication d'un insert en matériau composite va maintenant être décrit.

Dans le procédé de fabrication d'un insert de matériau composite, comprenant une étape de bobinage d'une nappe de fils enduits, la nappe est solidarisée, en début de bobinage, au conteneur ou à un mandrin, en fin de bobinage, à la couche précédente, par exemple par soudage par contact entre deux électrodes.

On peut souhaiter disposer d'un insert ne comportant pas de telles soudures, et n'étant pas forcément directement solidaire d'un conteneur ou d'un mandrin, que l'on puisse manipuler et subséquemment introduire dans la cavité annulaire d'un conteneur.

C'est ainsi que l'on propose conformément à l'invention un procédé de fabrication d'un insert, comportant une étape d'accrochage mécanique d'une nappe de fils enduits avec un clinquant, en début et en fin de bobinage.

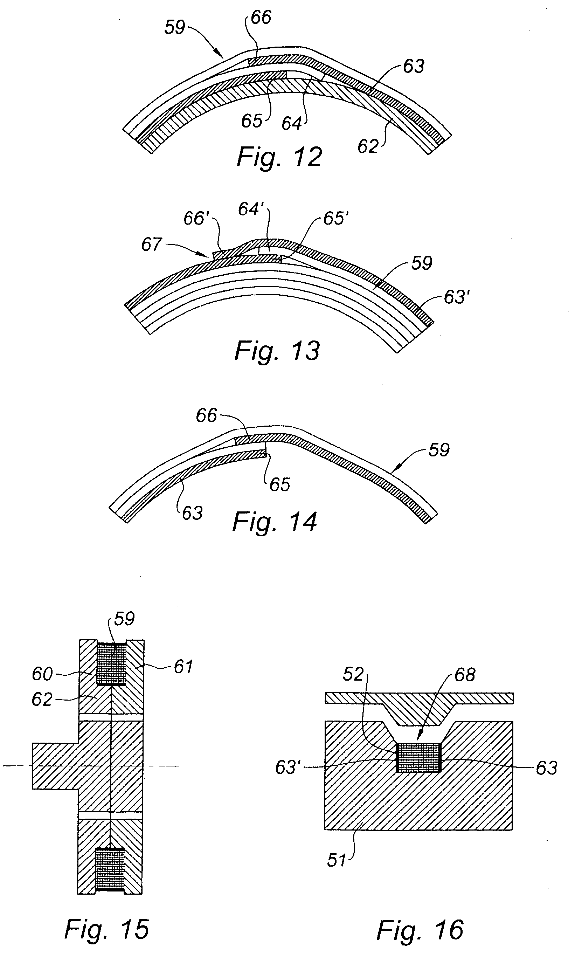

En référence à la figure 15, qui représente la fin du bobinage d'une nappe avec des étapes d'accrochage avec un clinquant en début et en fin de bobinage, une nappe 59 d'une pluralité de fils enduits est bobinée entre deux flasques 60, 61, entre lesquels s'étend un mandrin 62 dont les flasques 60, 61 sont solidaires. Les flasques 60, 61 et le mandrin 62 forment ainsi une pièce de révolution. De préférence, la nappe de fils enduits 59 est obtenue par le procédé de fabrication d'une nappe de fils enduits décrit plus haut.

En référence à la figure 12, lors du bobinage de la première couche de la nappe 59, on bobine avec la nappe un clinquant 63, c'est-à-dire une feuille de métal. Le clinquant est de préférence dans la même matière que l'enrobage des fils enduits, ou un matériau similaire, ici en alliage de Titane. Le clinquant est de préférence de la même largeur que celle de la nappe de fils enduits 59. Sa longueur est légèrement supérieure à la circonférence du mandrin 62 autour duquel il est enroulé.

Le clinquant 63 est placé sous la nappe 59 qui est bobinée, la première portion d'extrémité 64 de la nappe 59 dépassant en amont au-delà de la première portion d'extrémité 65 du clinquant 63. Le clinquant 63 et la nappe 59 sont enroulés sur un tour autour du mandrin 62, le clinquant 63 étant donc en contact avec le mandrin 62. A la fin du tour, le clinquant 63 passe au-dessus de la première portion d'extrémité 64 de la nappe 59 et la recouvre partiellement, sa seconde portion d'extrémité 66 se situant au-delà du niveau de la première portion d'extrémité 65 du clinquant 63 et la recouvrant donc, le clinquant 63 coinçant la première couche de la nappe 59, notamment sa portion d'extrémité 64, entre ses deux portions d'extrémité 65, 66. Le clinquant 63 assure ainsi une fonction d'accrochage de la nappe 59, ici de sa première couche bobinée, donc de la partie interne de l'insert qui sera formé, puisque sa seconde portion d'extrémité 66 est ensuite bloquée par le bobinage des autres couches de la nappe 59.

Le bobinage de la nappe 59 est poursuivi de façon à bobiner le nombre de couches requis et, en fin de bobinage, en référence à la figure 13, un nouveau clinquant 63' est rapporté et enroulé, sur le dernier tour, au-dessus de la dernière couche de la nappe 59, afin d'assurer une fonction d'accrochage de la nappe 59, ici de sa dernière couche bobinée, donc de la partie externe de l'insert bobiné. Le clinquant 63' de fin de bobinage est semblable au clinquant 63 de début de bobinage, exception faite de sa longueur, plus grande, qui est adaptée à la circonférence de la dernière couche de la nappe 59. La première portion d'extrémité 65' du clinquant 63' est placée en dessous de la deuxième portion d'extrémité 64' de la nappe 59, qui correspond à la portion d'extrémité 64' de sa dernière couche. Le clinquant 63' est enroulé, seul, autour de cette dernière couche de la nappe 59 et sa deuxième portion d'extrémité 66' passe au-dessus de la deuxième portion d'extrémité 64' de la nappe 59, qui est ainsi coincée entre les première et deuxième portions d'extrémité 65', 66' du clinquant 63' de fin de bobinage.

De préférence, la longueur du clinquant 63' de fin de bobinage est choisie de telle sorte que sa deuxième portion d'extrémité 66' passe par-dessus la deuxième portion d'extrémité 64' de la nappe 59 et puisse venir en contact avec la surface externe du clinquant 63' de fin de bobinage, à proximité de sa première portion d'extrémité 65'. De préférence dans ce cas, on soude cette deuxième portion d'extrémité 66' à la surface externe du clinquant 63', le long de leur bande de contact 67, par tout procédé de soudage approprié. Tout autre moyen de fixation peut être mis en oeuvre.

On obtient ainsi une bobine de fils enduits, bobinée selon une pluralité de couches, avec un moyen d'accrochage du côté interne - clinquant de début de bobinage 63 - et du côté externe - le clinquant de fin de bobinage 63'. Ces clinquants 63, 63' assurent le maintien de la bobine, qui peut donc être enlevée de la pièce comportant le mandrin 62 et les flasques 60, 61, et manipulée telle quelle. A cet effet, un des flasques peut être amovible. Cette bobine forme un insert 68 bobiné de matériau composite. La rigidité de l'insert 68 dépend de l'épaisseur choisie pour les clinquants 63, 63'. Typiquement, cette épaisseur peut être comprise entre 0,2 et 0,5 mm pour un clinquant en alliage de Titane. Le clinquant interne, ou clinquant de début de bobinage 63, forme une base de support de l'insert bobiné 68. Le clinquant externe, ou clinquant de fin de bobinage 63', forme l'enveloppe externe de l'insert bobiné 68.

Une fois l'insert 68 enlevé de son support, la première portion d'extrémité 64 de la nappe 59 dépasse, du côté interne, de la première portion d'extrémité 65 du clinquant 63. De préférence, en référence à la figure 14 sur laquelle seules les deux premières couches de l'insert bobiné 68 sont représentées, cette portion d'extrémité 64 est découpée, ou arasée, au droit de l'extrémité du clinquant 63.

De préférence, la deuxième portion d'extrémité 66 du clinquant interne 63 et la première portion d'extrémité 65' du clinquant externe 63' sont d'épaisseur réduite par rapport au reste du clinquant considéré 63, 63', du moins sur leur portion destinée à être située au droit à la fois d'une portion d'extrémité 64, 64' de la nappe 59 et de l'autre portion d'extrémité 65, 66' du clinquant considéré 63, 63'. Cela permet de réduire les excroissances radiales liées au chevauchement de clinquant. De préférence également, ces zones de chevauchement des clinquants interne 63 et externe 63' sont décalées angulairement afin de minimiser les excroissances radiales.

Le reste de l'épaisseur des clinquants 63, 63' est le fruit d'un compromis. En effet, l'épaisseur de chaque clinquant 63, 63' doit être la plus faible possible pour limiter l'augmentation de dimension radiale due à sa présence, mais suffisamment grande pour assurer la rigidité de l'insert bobiné 68 pour ses manipulations ultérieures, en fonction de l'application à laquelle il est destiné.

En référence à la figure 16, l'insert bobiné 68, une fois formé avec ses clinquants 63, 63' d'accrochage, ou de maintien, est disposé dans la cavité annulaire 52 d'un conteneur 51, semblable au conteneur préalablement évoqué ou aux conteneurs de l'art antérieur. On rapporte un couvercle annulaire 48 et l'ensemble est compacté de manière isostatique à chaud, afin d'obtenir une pièce avec un insert en matériau composite, de façon connue.

## Revendications

1. Procédé de fabrication d'un insert bobiné de fils enduits, chaque fil comportant une fibre céramique enrobée d'une gaine métallique, **caractérisé par le fait qu'**il comporte une étape de bobinage d'une nappe de fils (59) enduits sur une pièce (62) dans laquelle, en début de bobinage, on bobine un clinquant métallique (63) d'accrochage de la partie interne de l'insert, en fin de bobinage, on bobine un clinquant métallique (63') d'accrochage de la partie externe de l'insert.

2. Procédé de fabrication d'un insert bobiné de fils enduits selon la revendication 1, **caractérisé par le fait que** la deuxième portion (66') d'extrémité du clinquant (63') d'accrochage de la partie externe de l'insert recouvre la dernière couche de la nappe (59) et est soudée à proximité de sa première portion (65') d'extrémité.

3. Procédé de fabrication d'un insert bobiné de fils enduits selon l'une des revendications 1 et 2, dans lequel la première portion (65) d'extrémité du clinquant (63) d'accrochage de la partie interne de l'insert est arasée au droit de la première portion d'extrémité de la nappe.

4. Procédé de fabrication d'un insert bobiné de fils enduits selon l'une des revendications 1 à 3, dans lequel la nappe (59) est formée par soudage laser, qui forme des points de soudure entre les fils voisins.

5. Procédé de fabrication d'un insert bobiné de fils enduits selon l'une des revendications 1 à 4, dans lequel, en fin de procédé, on enlève l'insert bobiné de la pièce sur laquelle il a été bobiné avec les clinquants.

6. Insert bobiné de fils enduits, formé par le procédé de l'une des revendications 1 à 5, comportant un bobinage d'une nappe de fils enduits avec un clinquant métallique (63) d'accrochage de sa partie interne et un clinquant métallique (63') d'accrochage de sa partie externe.

7. Procédé de fabrication d'une pièce avec un insert en matériau composite à matrice métallique, au sein duquel s'étendent des fibres céramiques, dans lequel on place un insert bobiné de fils enduits obtenu selon le procédé de l'une des revendications 1 à 5 dans une cavité (52) annulaire d'un conteneur métallique (51), on rapporte un couvercle métallique (48) sur le conteneur et on soumet l'ensemble à une compaction isostatique à chaud.

## Claims

1. A process for manufacturing a coiled insert of coated filaments, each filament comprising a ceramic fiber coated with a metal sheath, **characterized in that** the process includes a step of winding a sheet of coated filaments (59) onto a piece (62), in which step, at the start of winding, a metal shim for catching (63) the internal part of the insert is coiled and, at the end of winding, a metal shim for catching (63') the external part of the insert is coiled.

2. The process for manufacturing a coiled insert of coated filaments as claimed in claim 1, wherein the second end portion (66') of the shim (63') for catching the external part of the insert covers the last layer of the sheet (59) and is welded close to its first end portion (65').

3. The process for manufacturing a coiled insert of coated filaments as claimed in either of claims 1 and 2, in which the first end portion (65) of the shim (63) for catching the internal part of the insert is flush in line with the first end portion of the sheet.

4. The process for manufacturing a coiled insert of coated filaments as claimed in one of claims 1 to 3, in which the sheet (59) is formed by laser welding, which forms spot welds between the adjacent filaments.

5. The process for manufacturing a coiled insert of coated filaments as claimed in one of claims 1 to 4, in which, at the end of the process, the coiled insert is removed from the piece onto which it has been coiled with the shims.

6. A coiled insert of coated filaments, formed by the process as claimed in one of claims 1 to 5, comprising a coil of a sheet of coated filaments with a metal shim (63) for catching its internal part and a metal shim (63') for catching its external part.

7. A process for manufacturing a component with an insert made of a composite having a metal matrix, within which ceramic fibers extend, in which process a coiled insert of coated filaments obtained according to the method of one of claims 1 to 5 is placed in an annular cavity (52) of a metal container (51), a metal lid (48) is added to the container, and the assembly is compacted by hot isostatic pressing.

## Patentansprüche

1. Verfahren zur Herstellung eines Einlegestücks, das aus beschichteten Fäden gewickelt ist, wobei jeder Faden eine Keramikfaser aufweist, die von einer metallischen Hülle überzogen ist, **dadurch gekennzeichnet, dass** es einen Schritt aufweist, in welchem ein Teil (62) mit einer Lage beschichteter Fäden (59) umwickelt wird, wobei zu Beginn des Wickelvorgangs eine Metallfolie (63) zumBefestigendes innerenAbschnitts des Einlegestücks gewickelt wird und zum Ende des Wickelvorgangs eine Metallfolie (63') zum Befestigen der äußeren Abschnitts des Einlegestücks gewickelt wird.

2. Verfahren zur Herstellung eines Einlegestücks, das aus beschichteten Fäden gewickelt ist, nach Anspruch 1, **dadurch gekennzeichnet, dass** das zweite endständige Teilstück (66') der Folie (63') zur Befestigung des äußeren Abschnitts des Einlegestücks die letzte Schicht der Lage (59) bedeckt und in der Nähe von deren erstem endständigen Teilstücks (65') verschweißt ist.

3. Verfahren zur Herstellung eines Einlegestücks, das aus beschichteten Fäden gewickelt ist, nach einem des Ansprüche 1 et 2, wobei das erste endständige Teilstück (65) der Folie (63) zur Befestigung des inneren Abschnitts des Einlegestücks mit dem ersten endständigen Abschnitt der Lage bündig abschließt.

4. Verfahren zur Herstellung eines Einlegestücks, das aus beschichteten Fäden gewickelt ist, nach einem des Ansprüche 1 bis 3, wobei die Lage (59) durch Laserschweißen gebildet ist, indem zwischen benachbarten Fäden Schweißpunkte hergestellt werden.

5. Verfahren zur Herstellung eines Einlegestücks, das aus beschichteten Fäden gewickelt ist, nach einem des Ansprüche 1 bis 4, wobei zum Ende des Verfahrens das gewickelte Einlegestück von dem Teil, auf welchem es mit den Folien gewickelt wurde, entfernt wird.

6. Einlegestück, das aus beschichteten Fäden gewickelt ist, gebildet durch das Verfahren eines der Ansprüche 1 bis 5, aufweisend einen Wickelvorgang einer Lage beschichteter Fäden mit einer Metallfolie (63) zum Befestigen seines inneren Abschnitts und einer Metallfolie (63') zum Befestigen seines äußeren Abschnitts.

7. Verfahren zur Herstellung eines Teils mit einem Einlegestück aus Verbundwerkstoff mit metallischer Matrix, innerhalb dessen sich Keramikfasern erstrecken, wobei ein Einlegestück, das aus beschichteten Fäden gewickelt ist und gemäß dem Verfahren eines der Ansprüche 1 bis 5 erhalten wurde, in einen ringförmigen Hohlraum (52) eines metallischen Behälters (51) gelegt wird, der Behälter mit einem metallischen Deckel (48) versehen wird und die Gesamteinheit einem isostatischen Verdichtungsvorgang in der Hitze unterzogen wird.
